# EUROPEAN PATENT SPECIFICATION

(11) **EP 4 196 353 B1**
(45) Date of publication and mention of the grant of the patent: **28.10.2026**
(21) Application number: 21819938.8
(22) Date of filing: 23.11.2021
(51) Int. Cl.: B41M 7/00, C09D 11/14, C09D 11/101

(54) **A UV PRINTING PROCESS**
UV-DRUCKVERFAHREN
PROCÉDÉ D'IMPRESSION UV

(30) Priority: 23.11.2020 US 202063116969 P; 13.07.2021 US 202163221104 P
(43) Date of publication of application: 21.06.2023
(73) Proprietor: Sun Chemical Corporation, Parsippany, NJ 07054 (US)
(72) Inventor: BALCH, Andrew, Midsomer Norton Bath and North East Somerset BA3 4RT (GB); ILLSLEY, Derek, Midsomer Norton Bath and North East Somerset BA3 4RT (GB)
(74) Representative: Carpmaels & Ransford LLP
(86) International application number: PCT/GB2021/053022
(87) International publication number: WO 2022/106853

(56) References cited:
- EP-A1- 3 257 907
- WO-A1-2016/144839
- WO-A1-2021/111134

## Description

The present invention provides a method of curing an ink composition comprising an aminoacrylate and ≤9% (w/w) of any blend of photoinitiators, wherein the curing is carried out by exposure to two or more separate UV irradiations from UV-LED lamps and the sum total of all the separate UV exposures is 450 mJ/cm² or less.

### BACKGROUND

A number of references describe UV-inkjet compositions which may be cured under the action of the output from UV-LED light sources, but invariably require, as exemplified by the examples, photoinitiator concentrations in excess of 9.0% to achieve the desired cure.

EP2302007 discloses thioether substituted benzophenone photoinitiators and their use in the UV-LED curing of inkjet compositions. The examples all contain greater than 9% photoinitiator (mostly greater than 14%) in order to achieve satisfactory cure. The process of curing the compositions through a multi-exposure approach is not disclosed.

WO2018197852 describes how to overcome the colour shift issue associated with the use of thioxanthone-containing inkjet compositions through the use of specific stabiliser and monomer blends. All examples comprise greater than 9.0wt% photoinitiator.

GB2554817 discloses how polyethyleneimine-based dispersants can help overcome the poor surface cure of UV-LED curable inkjet compositions. The examples comprise 12wt% photoinitiator with a further requirement that the minimum acylphosphine oxide photoinitiator concentration should be 4wt%. Furthermore, GB2554817 does not reveal, nor allude to, the use of acrylated amines in combination with the multi-exposure approach of the present invention to achieve the required cure at acceptable total doses, with photoinitiator concentrations as low as 6.0% (w/w) or less, such as 5.0%, and lower.

WO2017/191043 discloses thiol modified acylphosphine oxide photoinitiators and their use in UV-LED curable inkjet compositions having reduced odour and extractability. The examples comprise greater than 16wt% photoinitiator, which is required to deliver the desired UV-cure.

US20110159251 discloses multifunctional inkjet compositions, with greater than 20% of multifunctional monomer, which may be cured by UV-LED lamps, and may comprise acrylated amines. The examples comprise greater than 10wt% of photoinitiator in order to achieve acceptable cure.

CN111349364, CN11349363, CN109535840 disclose high speed UV-LED curable inkjet compositions but a photoinitiator content of 11 to 20% (w/w) is required. Similarly, JP6126378, by way of the inventive examples, discloses inkjet compositions comprising greater than 10% (w/w) of photoinitiator blends with the further proviso that greater than 5% (w/w) of acylphospine oxide photoinitiator and more than 7% (w/w) of a tetrafunctional acrylate monomer be used. Furthermore, the ink requires greater than 55% (w/w) of the hybrid monomer 2-(2-Vinyloxyethoxy)ethyl acrylate ('VEEA'). None of these instances in the prior art disclose the process of the invention.

A number of instances in the literature describe multifunctional UV-curable inkjet compositions where the polymerizable component is comprised almost entirely of multifunctional monomers, which may further comprise acrylated amines and which may be cured under the action of the light emitted by UV-LED. US8985753, WO2016/007593, WO2016/186838 are instances of such multifunctional compositions, but none of these disclose how to satisfactorily cure inkjet compositions according to the present invention.

WO2016/199589 and US10195874 describe methods of reducing the oxygen concentration at the point of cure to enhance the UV cure response of inkjet compositions. WO2016/199589 discloses using an inert gas such as nitrogen to reduce the oxygen concentration to less than 5%, whereas US10195874 uses a physical atmosphere barrier film over the ink to prevent the ingress of oxygen. The present invention does not require the exclusion of oxygen from the point of cure and achieves cure, especially surface cure, even under the action of UV-LED light sources, with photoinitiator concentrations as low as 5.0%, or lower, in ambient air.

CN102863848 discloses UV-LED curable flexo ink compositions, but with photoinitiator concentrations of 14 to 19% (w/w).

WO2017/182638 describes low migration UV-LED curable ink compositions but without revealing the benefits of the multi-exposure approach of the present invention.

WO2019/055327 discloses UV-LED low migration flexo ink compositions comprising the monomer 3-methylpentanediol diacrylate. There is no disclosure of the advantages of the multi-exposure process of the present invention.

WO2018/170086 discloses UV-LED curable low yellowing coating compositions comprising less than 1% (w/w) of a violet pigment and the inventive examples incorporated an aminobenzoate synergist. There is no disclosure of the advantages of the multi-exposure process of the present invention. The ink compositions for use with the present invention comprise an aminoacrylate. While the inks for use in the invention may comprise an aminobenzoate, this component is not mandatory and the inks can be prepared essentially free of any aminobenzoate.

An issue facing the curing of inkjet inks when cured in air, especially with UV-LED light sources, is that oxygen inhibition can retard the cure. In particular, this oxygen inhibition presents itself as poor surface cure. This is seen as a real obstacle to achieving the effective cure of inkjet ink compositions with viscosities of less than 10 mPa.s at 45°C, in single pass printing applications.

WO2018/170086 describes the issues facing the UV-curing of flexo inks, including oxygen inhibition at print surfaces and the weaker capacity of UV-light emitted by UV-LED lamps in the 365 - 405 nm wavelength range to effect surface cure, compared with shorter wavelength UV light. WO2018/170086 also describes some of the measures which have been taken to overcome oxygen inhibition including; nitrogen inertion, incorporation of oxygen scavengers, using UV-LED lamps with a mixed array of LEDs emitting over a range of wavelengths and the use of mercaptans as a chain transfer agent. None of these approaches are ideal. For example, Nitrogen inertion requires additional capital and running costs. It is preferred to have an ink which can cure in ambient air at high speed using low photoinitiator concentrations. Further, photoinitiators are an expensive component of an ink and minimizing their content in inks is commercially advantageous. Moreover, using an array of UV-LED lamps emitting at different wavelengths is less efficient and requires increased costs due to of use of more lamps than required in the present invention. UV-LED lamps emitting at shorter wavelengths are lower powered and require also specific additional photoinitiators effective at lower wavelengths. Oxygen scavengers can have a negative impact on cure, as they interact with the free radicals generated during the UV-curing process. Finally, mercaptans can have an unpleasant odour and also react with acrylates, via Michael addition, causing instability issues with ink formulation. In contrast, the method of the present invention is a highly pragmatic way of overcoming the issue of oxygen inhibition that avoids the problems associated with the prior art. WO2021/111134A1 relates to a UV-curable inkjet composition comprising ≥20% (w/w) of any blend of monofunctional acrylate monomers, ≤7.5% (w/w) of any blend of photoinitiators, and one or more acrylated amines. WO2016/144839A1 relates to a system and methods for printing and curing ink deposited on a substrate using a first light source and a second light source.

Furthermore, almost invariably when assessing the cure performance of UV-curable inkjet inks, it is the norm to determine the cure response as a factor of the UV-dose as applied through a single exposure from the UV-light source or by the maximum speed on a press, with a single UV-light source, that still delivers acceptable cure. For the aforementioned reasons it is normal for inkjet compositions to comprise ≥10% (w/w) of blends of photoinitiators as part of the overall ink composition.

### SUMMARY OF THE INVENTION

The invention is defined by the appended claims. The present invention provides a method of curing an inkjet ink composition. The curing is carried out by exposure to two or more separate UV irradiations from UV-LED lamps and the sum total of all the separate UV exposures is 450 mJ/cm² or less. The first irradiation provides a cure dose of equal to or less than 75 mJ/cm² and a subsequent irradiation provides a cure dose equal to or greater than 100 mJ/cm², wherein the first irradiation cure dose and the subsequent irradiation cure dose are different. The ink comprises ≤ 9.0% (w/w) of any blend of photoinitiators as well as an acrylated amine. The ink further comprises ≤ 5.0% (w/w), such as less than 5% (w/w), of any acylphosphine oxide photoinitiators relative to the total weight of the inkjet ink composition. The curing of the inks is performed in a printing process with a press speed of 60 m/min or greater.

The invention achieves satisfactory cure according to the process with inks comprising 5% or less (w/w) of any blend of acylphosphine oxide photoinitiators, and can do so without the need of a tetrafunctional monomer. Thus, as a further aspect of the invention the compositions for use with the invention comprise 5% or less of any blend of tetrafunctional, pentafunctional or hexafunctional acrylate monomer, and preferably do not comprise any tetrafunctional, pentafunctional or hexafunctional acrylate monomer.

### DETAILED DESCRIPTION OF THE INVENTION

### Definitions

### (w/w) = the weight percentage of a component relative to the total weight of the composition, i.e. the inkjet ink composition for use with the invention.

Single pass inkjet printing = a printing process where the inkjet printheads are fixed and the substrate passes underneath the printheads either as a reel or is sheetfed. A single pass inkjet press capable for this multi-UV exposure process may comprise two or more UV light sources positioned after the printing stations in order to provide the multiple irradiations required by the method of the invention in a single pass of the inkjet head.

Multipass inkjet printing = the printheads passes over the substrate multiple times to build up the print image. A single UV light source could be used with multipass inkjet printing in order to provide the multiple irradiations required by the method of the invention.

### The invention

The present invention describes the unique finding that UV-curable inkjet ink compositions can be more effectively cured by curing the pigmented ink compositions through two or more exposures to UV rather than a single exposure, where the total UV dose supplied by the multi-exposure approach is the same or less than the dose supplied by the single exposure. This finding is especially useful for the UV-LED curing of inkjet compositions, and especially so for pigmented ink compositions comprising greater than 1.5% of an organic or inorganic pigment.

The invention is particularly suited to the narrow web UV-LED inkjet printing market, including the printing of labels and lids. It is also suited to the printing of UV-LED curable (black) coding and marking inks. A further feature of the invention is that where photoinitiators suitable for low migration printing are used, the invention may be used successfully in the printing of food packaging substrates.

The pigmented inks of the invention preferably include greater than 1.5% (w/w) of any blend of organic or inorganic pigments and as a further aspect of the invention is an ink set comprising at least a black ink but which may also further comprise a cyan, magenta and yellow ink. It is a requirement of the invention that all inks should be exposed to at least two separate UV irradiations, especially from a combination of UV-LED lamps.

### Method of Printing of the Invention

The inventors have found that pigmented UV-curable inkjet inks can be satisfactorily cured with total UV doses of less than 350 mJ/cm² through a multi-exposure approach. Indeed, the inventors have shown that it is possible to achieve satisfactory surface cure with inkjet compositions comprising 6% (w/w) or less, such as 5.0% (w/w) or less, or 4.0% (w/w) or less, of a blend of photoinitiators with UV-LED doses of 250 mJ/cm², or less.

Where the inks are cured via two or more exposures, the inventors have found that the cure of the inks, especially the surface cure, is much more effective than if the inks are cured through a single exposure where the UV dose is equal to, or indeed greater than the sum of the individual exposures of the multi-exposure process. Furthermore, the inventors have found that the inkjet inks for use with the invention can be effectively cured using a first irradiation with a low UV dose, such as equal to or less than 100 mJ/cm², and a subsequent irradiation with a higher UV dose, such as equal to or greater than 100 mJ/cm²; wherein the first irradiation dose and the second irradiation dose are not the same.

This is a key finding as it could enable the printing of UV inkjet inks at increased press speeds, a highly desirable feature of the invention. A further potential advantage is the configuration of inkjet presses with lower power UV-LED lamps, with benefits of cooling and overall power consumption. Thus, the invention will enable the successful printing of UV-curable inkjet inks with total UV doses as low as 350 mJ/cm² or less, such as 250 mJ/cm², and even lower. Clearly, an environmental benefit accrues from the effective curing with lower UV-lamp power consumption. Yet furthermore, UV-LED lamps are well recognised as safer than conventional mercury UV lamps. The shift in the industry to the use of UV-LED lamps will be further enabled by the invention.

The finding that significantly improved cure can be achieved by exposing inkjet inks of the invention to two or more exposures from the output of UV-LED light sources rather than a single exposure where the total doses delivered by the multi-exposure process are equivalent, or less, is one which has not been adequately disclosed, or alluded to, in the prior art. Thus, for example, the inventors have shown that inks prepared according to the invention cure very much more effectively when exposed to a combination of 50 + 200 mJ/cm², or 50 + 50 + 150 mJ/cm² exposures from a 395nm UV-LED light source than is possible with a single exposure of 250 mJ/cm² or even 350 mJ/cm². These findings confirm and support the principal tenet of the invention and show the potential technical and commercial benefits that might accrue.

Thus, an aspect encompassed by the invention is that satisfactory surface cure of inkjet inks can be achieved at a lower total dose via two or more exposures to a UV-LED light source than can be achieved by a single exposure.

The multi-exposure UV-LED curing process of the invention provides the following advantages:
1. A more energy efficient curing process, with consequent energy savings.
2. The potential for using lower power UV-LED lamps at the end of a printing process. Although higher power lamps are being developed, with peak power irradiances of 20 W/cm² or greater, the heat output from these often requires water-cooling with the associated undesirable requirements for plumbing and pumping.
3. The ability of the present invention to operate using lower UV doses, with total photoinitiator concentrations of 9.0% (w/w), or less, allows for higher press speeds. Thus, the method of the invention may use press speeds of 60 m/min, or greater.
4. The use of lower photoinitiator concentrations than would be the case with a single exposure curing process provides reduced migration for food packaging applications.
5. Presses using lower power UV-LED lamps at the end of the printing process can be configured with associated energy savings. Higher power UV-LED lamps are continuing to be developed but an issue with such lamps (with power outputs of 20 W/cm², or greater) is that often water-cooling is required with the entrained issues of plumbing, pumps, and the like. Using lower powered air-cooled UV-LED lamps is clearly beneficial. Thus, a further optional aspect of the invention is that at least one of the UV-LED lamps used in the inventive process is air-cooled.
6. Although curing via UV-LED light sources emitting in the 380-410nm range is preferred, the invention will allow for the printing of inkjet inks using UV-LED light sources emitting at wavelengths of 385nm or less. The effective and high-speed printing of inkjet inks by UV-LED curing is highly desirable as a switch from mercury lamps. The inks for use in the invention may be cured using UV light source emitting at a wavelength of 350 nm or higher. The inks for use in the invention may comprise photoinitiators that are photoactive above 350 nm, for example, wherein all photoinitiators present in the ink are photoactive above 350 nm. By photoactive it means that the photoinitiators are capable of absorbing UV light within the specified wavelength to convert it into radical species for initiating polymerisation, in other words, the peak UV absorption of the UV-photoinitiators is within the specified wavelength range.

### UV Lamps

At least one of the UV-LED lamps used in the method should have a peak irradiance power output of 24 W/cm² or less, and preferably 20 W/cm² or less. Peak irradiance is the radiant power arriving at a surface per-unit area. The UV lamps used in the method of the invention may have a peak in the wavelength range above 350nm, such as between 365 and 405 nm, or between 380 and 410 nm. Having a peak in the wavelength range means that the maximum value of the emission intensity is within said wavelength range when the emission spectrum of the light source is measured.

### UV Dosage Regimes

The invention describes the surprising finding that UV-curable inkjet inks, especially those cured under the output from UV-LED lamps can be more effectively cured by subjecting the inks of the invention to two or more exposures of UV of lower total dose than a single exposure of the equivalent, or indeed greater, dose. The implications for this are that a more energy efficient curing process will ensue for a given press speed and that for the same total UV dose faster press speeds will be achievable. Yet a further benefit is that the inventive process will allow the preparation of inks with a lower photoinitiator requirement than would otherwise be possible, yet still achieve satisfactory cure response, especially surface cure. Yet a further benefit of the invention is that it will allow presses to be configured where at least one of the UV-LED lamps of the process is air-cooled.

The inventors do not wish to be bound by any particular theory but postulate that the superior (surface) cure achieved by applying two or more lower dose UV exposures than a single UV exposure of the same, or greater is likely to be related to a reduction in the impact of oxygen inhibition. Oxygen inhibition is a particular and well recognized problem for low viscosity ink and coating compositions such as UV inkjet, resulting in a retardation of the free radical polymerization of the acrylate monomers which are typically used. For low viscosity fluids, like UV inkjet (and flexo) inks, atmospheric oxygen may rapidly diffuse into the curing ink and retard the cure by producing stable peroxy radicals by reaction of biradical oxygen with active, initiating and propagating free radicals. The inventors postulate that by curing an inkjet ink by two or more lower dose UV exposures rather than a single high dose helps overcome the effects of oxygen inhibition by inducing an increase in ink viscosity in the first and succeeding exposures of the inventive process. This increase in viscosity reduces the rate of oxygen ingress into the ink print thereby reducing the effect of oxygen inhibition in the subsequent UV exposures, enabling a more energy efficient curing process. The relationship between ink viscosity and oxygen inhibition is one well understood by those skilled in the art and the inventive process is one which aims to address this in a practical way. Obviously, the effects of oxygen inhibition will present themselves more significantly in the uppermost surface of the ink print. For this reason, the invention is especially effective in enhancing the surface cure of UV inkjet inks for any given total UV dose.

At the same time, if too high a dose is applied in the first UV exposure prior to the subsequent (or final) curing exposure then much of the photoinitiator might be consumed, reducing the ink's capacity to cure effectively in the subsequent and final exposure. Thus, the inventors have found that if the total dose of the UV exposures prior to the subsequent (or final) exposure is preferably maintained below 100 mJ/cm², then highly effective cure can be achieved.

The inventors have demonstrated the benefits of the invention by assessing the improvements in surface cure by a simple method. This involves curing the inks of the invention and then immediately rubbing the print surface with a dry cotton wool bud. Inks that have good surface cure show no observable marking of the print surface whereas prints with poor surface cure show a degree of observable marking/disruption of the surface due to poorly cured ink (lacking physical integrity) at the print surface.

To help put the invention into context the inventors have prepared a number of inks and shown that the surface cure is more effectively achieved by curing with a 395nm UV-LED lamp when exposed to total doses of 150 to 450 mJ/cm² which is delivered in two or more exposures rather than a single exposure. Thus, an aspect of the invention is that the process involves curing inks of the invention by supplying a total UV dose of between 100 and 450 mJ/cm², and more preferably between 150 and 350 mJ/cm² by two or more individual UV exposures. For the printing of inkjet inks it is preferred that the total dose supplied by the individual exposures of the process should be 350 mJ/cm² or less, and in a further embodiment, 250 mJ/cm² or less. These individual UV exposures may be equivalent in dose or may vary in dose. Thus, it can be envisaged that a press could be configured with UV-LED lamps of varying power output after the final printing station to deliver the inventive features. For example, low power UV-LED lamps of, for example, 4 to 18 W/cm² could be used to deliver the earlier exposures with higher power UV-LEDs then being used to achieve the final desired surface cure. Obviously, this is merely an illustrative example of how the inventive curing process may be configured and should not be construed as limiting in any way.

The method of the invention comprises exposure to two or more separate UV irradiations from UV-LED lamps, wherein the first irradiation provides a cure dose of equal to or less than 100 mJ/cm² and a subsequent irradiation provides a cure dose equal to or greater than 100 mJ/cm², such as equal to or greater than 150 mJ/cm². The first irradiation cure dose and the subsequent irradiation cure dose are different. The total cure dose may be between 150 and 350 mJ/cm².

The first irradiation provides a cure dose of equal to or less than 75 mJ/cm² and a subsequent irradiation may provide a cure dose equal to or greater than 100 mJ/cm². The first irradiation may provide a cure dose of equal to or less than 50 mJ/cm² and a subsequent irradiation may provide a cure dose equal to or greater than 100 mJ/cm². The first irradiation may provide a cure dose of equal to or less than 50 mJ/cm² and a subsequent irradiation may provide a cure dose equal to or greater than 150 mJ/cm². The first irradiation may provide a cure dose of equal to less than 50 mJ/cm² and a subsequent irradiation may provide a cure dose equal to or greater than 200 mJ/cm². The total cure dose may be between 150 and 350 mJ/cm².

The method of the invention may comprise a maximum of two irradiation doses. The method of the invention may comprise a maximum of three irradiation doses.

The method of the invention may consist of exposure to two separate UV irradiations from UV-LED lamps, wherein the first irradiation provides a cure dose of equal to or less than 75 mJ/cm² and the second irradiation provides a cure dose equal to or greater than 100 mJ/cm², wherein the first irradiation cure dose and the subsequent irradiation cure dose are different. For example, the first irradiation may provide a cure dose of equal to or less than 50 mJ/cm² and the second irradiation may provide a cure dose equal to or greater than 100 mJ/cm². The first irradiation may provide a cure dose of equal to or less than 50 mJ/cm² and the second irradiation may provide a cure dose equal to or greater than 150 mJ/cm². The first irradiation may provide a cure dose of equal to or less than 50 mJ/cm² and the second irradiation may provide a cure dose of equal to or greater than 200 mJ/cm². The total cure dose may be between 150 and 350 mJ/cm².

The method of the invention may comprise exposure to three or more separate UV irradiations from UV-LED lamps, wherein the first and second irradiation provides cure doses each individually equal to or less than 75 mJ/cm² and a subsequent irradiation provides a cure dose equal to or greater than 100 mJ/cm², wherein the first irradiation cure dose and the second irradiation cure dose are different to the third irradiation cure dose. The first and second irradiations may individually provide a cure dose of equal to or less than 50 mJ/cm² and a subsequent irradiation may provide a cure dose equal to or greater than 100 mJ/cm². The total cure dose may be between 150 and 350 mJ/cm².

The method of the invention may consist of exposure to three separate UV irradiations from UV-LED lamps, wherein the first and second irradiation provides cure doses each individually equal to or less than 75 mJ/cm² and the third irradiation provides a cure dose equal to or greater than 100 mJ/cm², wherein the first irradiation cure dose and the second irradiation cure dose are different to the third irradiation cure dose. The first and second irradiations may individually provide a cure dose of equal to or less than 50 mJ/cm² and the third irradiation may provide a cure dose of equal to or greater than 100 mJ/cm². The total cure dose may be between 150 and 350 mJ/cm².

Equally, it could be envisaged that a press could be fitted with a series of 14 W/cm² or 18 W/cm² air cooled UV-LED lamps after the final printing station to deliver the desired surface cure. Yet a further feature of the invention is that it allows the use of UV-LED lamps emitting UV-light in the 385-405 nm range to achieve desired surface cure without recourse to lamps emitting at lower wavelengths, as indicated by WO2018/170086. However, it should be understood that the invention covers the use of UV-LED lamps emitting at any wavelength between 325 and 405 nm, and more preferably between 365 and 405nm. An aspect of the invention is that at least one of the UV-LED lamps should preferably be one which is air-cooled, for the reasons previously outlined.

It should be understood that although the invention is preferentially directed to a UV-curing process using only UV-LED light sources, that it also encompasses instances where inks according are cured by two or more emissions from UV-LED lamps prior to a final cure with a medium-pressure or low-pressure mercury lamp, including doped variants.

The method of the invention preferably involves printing the inks with a press speed of 60 m/min or greater, or 100 m/min or greater. For example, the process of the invention preferably involves printing the inks with a press speed of 60 m/min or greater, wherein the ink is cured with exposure to two or more separate UV irradiations from UV-LED lamps, with a total UV exposure of less than 200 mJ/cm². The specific components required by the inks for use with the invention in combination with the specific dosage regimes disclosed herein, facilitate the increased press speeds of the method of the invention.

The method of the invention can be conducted in a standard atmospheric concentration of oxygen. In other words, the concentration of oxygen in the atmosphere in which the method is performed does not need to be reduced from the standard atmospheric concentration in order to obtain satisfactory cure results. By "standard atmospheric concentration of oxygen" it is meant the concentration of oxygen present in the local atmosphere. For example, the method of the invention can be performed in an atmosphere with an oxygen concentration between 18 and 25% oxygen, such as between 19 and 21%, such as around 21% oxygen and obtain satisfactory cure results.

### Inks for use with the method of the invention

Although the invention is directed towards a process for curing UV-curable inkjet inks via single pass printing, the process also lends itself to the printing of other inks, for example flexo inks. In all cases the inventive process enables a number of advantageous ink features.

### Photoinitiators

The inks for use with the present invention total photoinitiator concentrations of less than 9.0% (w/w), less than 8.0 % (w/w), more preferably 7.0% (w/w), or less, 6.0% % (w/w) or less, and even more preferably 5.0% (w/w), or less. The photoinitiators may comprise a blend of thioxanthones and acylphosphine oxides. It should be understood that other photoinitiator types may be used, but this combination is especially effective, and especially when UV-LED lamps emitting at 385 to 405nm are used.

The UV-curable ink compositions comprise less than 7.0% (w/w), such as 6% (w/w) or less of a blend of photoinitiators comprising any thioxanthone, or derivative thereof, and any acylphosphine oxide.

Suitable thioxanthone photoinitiators which may be used include, but are not limited to; 2-isopropylthioxanthone, 4-isopropylthioxanthone, 2,4-diethylthioxanthone, 2,4-diisopropylthioxanthone, 2-chlorothioxanthone, 2-chloro-4-isopropylthioxanthone. Oligomeric/polymeric thioxanthones such as Omnipol TX (ex. IGM Resins) and Genopol TX (ex. Rahn) may be used. Polymerizable thioxanthones such as Omnipol 3ATX (ex. IGM Resins) may also be used. The oligomeric/polymeric and polymerizable derivatives are especially suited to low migration printing applications including the printing of food packaging, a further feature encompassed by the present invention. A further aspect encompassed by the invention and demonstrated by way of the examples is the printing of UV-LED curable black inks for coding and marking of food packaging. Black pigments absorb UV across all UV wavelengths and reduce the amount of UV light incident on the photoinitiators present, adversely affecting curing of the ink. Increasing the photoinitiator content to achieve satisfactory surface cure can result in too much UV light being absorbed in the surface layers, which prevents UV light penetrating into the sample, resulting in poorer through cure. The method of the invention allows the photoinitiator concentration of black inks to be reduced, improving through cure, whilst the method steps ensure that a good level of surface cure is nevertheless achieved. The capacity of the invention to enhance the surface cure is especially advantageous for low migration printing as it will reduce the risk associated with the migration of uncured monomers, oligomers and photoinitiators from the uppermost surface of a cured ink.

Suitable acylphosphine oxide photoinitiators include but are not limited to; diphenyl-(2,4,6-trimethylbenzoyl)-phosphine oxide, ethyl-(2,4,6-triemthylbenzoyl) phenyl phosphinate, phenylbis(2,4,6-trimethylbenzoyl)-phosphine oxide, and oligomeric/polymeric types such as Omnipol TP and Omnirad 820 (ex. IGM Resins). The latter three photoinitiators are especially suited to low migration printing applications.

It is preferred that the blend of thioxanthone and acylphosphine oxide photoinitiators should form less than 9.0% (w/w), more preferably 8.0% (w/w), or less, and even more preferably 7.0% (w/w), or less of the ink composition. The inventors have shown that it is possible to prepare inks with photoinitiator contents of 4.0% (w/w), or less, that can deliver acceptable surface cure via the inventive process within the limits of the total cure dose previously outlined.

The ink composition of the invention may comprise at least 0.01% (w/w) of any blend of photoinitiators, such as at least 0.5wt% (w/w), at least 1% (w/w), at least 2% (w/w), or at least 3% (w/w) of any blend of photoinitiators.

An acylphosphine oxide photoinitiator may be present in an amount between 0.01% and 5% (w/w), such as 0.01% and 4% (w/w), 0.01% and 3% (w/w), 0.5% and 3% (w/w), 1% and 5% (w/w), 1% and 4% (w/w), 1% and 3% (w/w), or 2% and 4% (w/w). The acylphosphine oxide photoinitiator may be present in an amount 6% (w/w) or less, such as 5% (w/w) or less, less than 5% (w/w), or 4% (w/w) or less.

The thioxanthone photoinitiator may be present in an amount between 0.01% and 5% (w/w), such as 0.01% and 4% (w/w), 0.01% and 3% (w/w), 0.5% and 3% (w/w), 1% and 5% (w/w), 1% and 4% (w/w), 1% and 3% (w/w), 1.5% and 3% (w/w), or around 2% (w/w). The thioxanthone photoinitiator may be present in an amount of 5% (w/w) or less, such as 4% (w/w) or less, 3% (w/w) or less, or 2% (w/w) or less.

The thioxanthones and acylphosphine oxide photoinitiators may be blended in any ratio but preferably the ratio should be in the range 10:1 and 1:10 of thioxanthone to acylphospine oxide, more preferably in the range 4:1 and 1:4, and even more preferably in the range 2:1 to 1:4.

A further advantageous reason when curing in air, for the defined photoinitiator blend, is that the use of type II photoinitiators, including diethylthioxanthone (DETX) and Omnipol TX as used in the examples, is beneficial. Such photoinitiators, although known to work in combination with aminoacrylates, may also further benefit from the multi-exposure UV processes encompassed by the invention. Again, the inventors do not wish to be held to any theory but postulate that type II photoinitiators may be regenerated to an extent through oxidative processes between each UV exposure (e.g. N. Karaca et.al. in Chapter 1; "Photopolymerisation Initiating Systems", 2018, pp 1-13 (Polymer Chemistry Series, RSC Publication). If this occurs, then it would be clearly beneficial to the multi-UV exposure aspect of the invention, as the type II photoinitiator would be regenerated to an extent between UV exposures making it available for subsequent UV exposures.

The invention also encompasses hybrid presses where any combination of flexo and inkjet printing stations is used to generate printed matter.

There is no restriction on the type, blend, or concentration of free radical photoinitiators used, other than those previously mentioned, and can include any of, but not limited to the following (and combinations thereof):
a) α-hydroxyketones such as; 1-hydroxy-cyclohexyl-phenyl-ketone; 2-hydroxy-2-methyl-1-phenyl-1-propanone; 2-hydroxy-2-methyl-4'-tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methylvinyl)phenyl]propanone; bis[4-(2-hydroxy-2-methylpropionyl)phenyl]methane; 2-Hydroxy-1-[1-[4-(2-hydroxy-2-methylpropanoyl)phenyl]-1,3,3-trimethylindan-5-yl]-2-methylpropan-1-one and 2-Hydroxy-1-[4-[4-(2-hydroxy-2-methylpropanoyl)phenoxy]phenyl]-2-methylpropan-1-one; acylphosphine oxides such as; 2,4,6-trimethylbenzoyl-diphenylphosphine oxide; ethyl (2,4,6-trimethylbenzoyl)phenyl phosphinate, bis-(2,4,6-trimethylbenzoyl)-phenylphosphine oxide; and bis(2,6-dimethoxybenzoyl)-2,4,4-trimethylpentylphosphinoxide.
b) α-aminoketones such as; 2-methyl-1-[4-methylthio)phenyl]-2-morpholinopropan-1-one; 2-benzyl-2-dimethylamino-1-(4-morpholinophenyl)-butan-1-one; and 2-dimethylamino-2-(4-methyl-benzyl)-1-(4-morpholin-4-yl-phenyl)-butan-1-one;
c) thioxanthones such as; 2-4-diethylthioxanthone, isopropylthioxanthone, 2-chlorothioxanthone, and 1-chloro-4-propoxythioxanthone;
d) benzophenones such as; such as benzophenone, 4-phenylbenzophenone, and 4-methylbenzophenone; methyl-2-benzoylbenzoate; 4-benzoyl-4-methyldiphenyl sulphide; 4-hydroxybenzophenone; 2,4,6-trimethyl benzophenone, 4,4-bis(diethylamino)benzophenone; benzophenone-2-carboxy(tetraethoxy)acrylate; 4-hydroxybenzophenone laurate and 1-[-4-[benzoylphenylsulpho]phenyl]-2-methyl-2-(4-methylphenylsulphonyl)propan-1-one;
e) phenylglyoxylates such as; phenyl glyoxylic acid methyl ester; oxy-phenyl-acetic acid 2-[hydroxyl-ethoxy]-ethyl ester, or oxy-phenyl-acetic acid 2-[2-oxo-2-phenyl-acetoxy-ethoxy]-ethyl ester;
f) oxime esters such as; 1-phenyl-1,2-propanedione-2-(O-ethoxycarbonyl)oxime; [1-(4-phenylsulfanylbenzoyl)heptylideneamino]benzoate, or [1-[9-ethyl-6-(2-methylbenzoyl)carbazol-3-yl]-ethylideneamino]acetate.

Examples of other suitable photoinitiators include diethoxy acetophenone; benzil; benzil dimethyl ketal; titanocen radical initiators such as titanium-bis(η 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

Polymeric photoinitiators and sensitizers are also suitable, including for example polymeric aminobenzoates (GENOPOL AB-1 or AB-2 from RAHN, Omnipol ASA from IGM or Speedcure 7040 from Lambson), polymeric benzophenone derivatives (GENOPOL BP-1 or BP-2 from RAHN, Omnipol BP, Omnipol BP2702 or Omnipol 682 from IGM or Speedcure 7005 from Lambson), polymeric thioxanthone derivatives (GENOPOL TX-1 or TX-2 from RAHN, Omnipol TX from IGM or Speedcure 7010 from Lambson), polymeric aminoalkylphenones such as Omnipol 910 from IGM; polymeric benzoyl formate esters such as Omnipol 2712 from IGM; and the polymeric sensitizer Omnipol SZ from IGM.

### Aminoacrylates

The ink compositions for use in the invention also comprise an aminoacrylate (also referred to herein as an acrylated amine). Aminoacrylates are the products of the reaction between an acrylate functional monomer or oligomer and a primary or secondary amine. As demonstrated by way of the examples, it is preferred that the aminoacrylate content of ink compositions for use with the invention should be 5.0% (w/w), or greater, and more preferably 7.0% (w/w) or greater. Aminoacrylates include amine-modified polyether acrylates.

Aminoacrylates for use with the present invention include but are not limited to; EBECRYL 80, EBECRYL 81, EBECRYL 83, EBECRYL 85, EBECRYL 880, EBECRYL LEO 10551, EBECRYL LEO 10552, EBECRYL LEO 10553, EBECRYL 7100, EBECRYL P115, EBECRYL P116, EBECRYL LED 03, available from ALLNEX; CN501, CN550, CN UVA421, CN3705, CN3715, CN3755, CN381 and CN386, all available from Sartomer; GENOMER 3430, GENOMER 5142, GENOMER 5161, GENOMER 5271 and GENOMER 5275 from RAHN; PHOTOMER 4250, PHOTOMER 4771, PHOTOMER 4967, PHOTOMER 5006, PHOTOMER 4775, PHOTOMER 5662, PHOTOMER 5850, PHOTOMER 5930, and PHOTOMER 4250 all available from IGM, LAROMER LR8996, LAROMER LR8869, LAROMER LR8889, LAROMER LR8997, LAROMER PO 83F, LAROMER PO 84F, LAROMER PO 94F, LAROMER PO 9067, LAROMER PO 9103, LAROMER PO 9104, LAROMER PO 9106 and LAROMER PO77F, all available from BASF; AGISYN 008, AGISYN 701, AGISYN 702, AGISYN 703, NeoRad P-81and NeoRad P-85 ex DSM-AGI.

Furthermore, the aminoacrylates disclosed in WO2016186838, WO2017095786 and WO2017160784 by way of the descriptions and examples are also encompassed by the present invention, and may be incorporated into the inks for use with the present invention.

Although there is no restriction on the amount of aminoacrylate that might be used in the inventive compositions it is preferred that at least 2.0% (w/w), and more preferably at least 4.0% (w/w), more preferably at least 5.0% (w/w), and even more preferably at least 7.0% (w/w) should be used.

Aminobenzoate type amine synergists may also be optionally used. However, inks for use with the present invention with acceptable performance can be prepared which are essentially free of any aminobenzoate amine synergist.

Mercaptans and thio-ether synergists may also be optionally used but their use may be unfavorable due to the associated odor.

### Radically polymerizable monomers and oligomers

Compositions used in the present invention may comprise any amount of any blend of free radically polymerizable monomers and oligomers.

The ink compositions for use in the invention may comprise a monofunctional monomer. The ink compositions for use in the invention may comprise less than 20 wt% (w/w) of monofunctional monomers, such as less than 10 wt% (w/w), or less than 5% (w/w) monofunctional monomers. The ink compositions for use in the invention may comprise no monofunctional monomers.

Examples of suitable monofunctional ethylenically unsaturated monomers include but are not limited to those defined in the following paragraph (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethyleneoxide and propylene oxide. Equivalent methacrylate compounds are also capable of being used, although those skilled in the art will appreciate that methacrylate compounds have lower reactivity than their equivalent acrylate counterparts.

Suitable monofunctional ethylenically unsaturated monomers include isobutyl acrylate; cyclohexyl acrylate; iso-octyl acrylate; n-octyl acrylate; isodecyl acrylate; iso-nonyl acrylate; octyl/decyl acrylate; lauryl acrylate; 2- propyl heptyl acrylate; tridecyl acrylate; hexadecyl acylate; stearyl acrylate; iso-stearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy trimethylene glycol acrylate; tripropyleneglycol monomethyl ether acrylate; diethylenglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate.

Examples of suitable multifunctional ethylenically unsaturated monomers include but are not limited to those defined in the following paragraph (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts.

Suitable multifunctional ethylenically unsaturated monomers include 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5-pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 1,4-butanediylbis[oxy(2-hydroxy-3,1-propanediyl)]diacrylate; ethoxylated bisphenol A diacrylate; propoxylated bisphenol A diacrylate; propoxylated ethoxylated bisphenol A diacrylate; ethoxylated bisphenol F diacrylate; 2-(2-Vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; e-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaaacrylate; dipentaerythritol hexaacrylate; ethoxylated dipentaerythritol hexaacrylate.

The inks may comprise greater than 20% of multifunctional monomers, such as greater than 30% (w/w), greater than 40% (w/w), greater than 50% (w/w), greater than 60% (w/w), or greater than 70% (w/w) multifunctional monomers, such as between 70% and 80% (w/w) multifunctional monomers.

The inks may comprise greater than 20% (w/w) difunctional monomers, such as greater than 30% (w/w), greater than 40% (w/w), greater than 50% (w/w), or greater than 60% (w/w), difunctional monomers, such as between 60% and 70% (w/w) difunctional monomers.

The inks may comprise greater than 5% (w/w) trifunctional monomers, such as greater than 10% (w/w) trifunctional monomer, such as between 10% and 20% (w/w) trifunctional monomers.

Examples of monomers comprising free-radically polymerizable groups other than acrylate include N-vinyl amides. Examples of N- vinyl amides include but are not limited to N-vinylcaprolactam (NVC), N-vinyl pyrollidone (NVP), diacetone acrylamide, N-vinyl carbazole, N-acryloxyoxy ethylcyclohexanedicarboximide, N-vinyl imidazole, N-vinyl-N-methylacetamide (VIMA) or acryloyl morpholine (ACMO). Vinyl ethers such as 2-(2-vinyloxyethoxy)ethyl(meth)acrylate (VEEA, VEEM), diethylene glycol divinyl ether(DVE2), triethylene glycol divinyl ether (DVE3), ethyl vinyl ether, n-butyl vinyl ether, iso-butyl vinyl ether, tert-butyl vinyl ether, cyclohexyl vinyl ether (CHVE), 2-ethylhexyl vinyl ether (EHVE),dodecyl vinyl ether (DDVE), octadecyl vinyl ether (ODVE), 1-2-butanediol divinyl ether (BDDVE), 1-4,cyclohexanedimethanol divinylether (CHDM-di), hydroxybutyl vinylether (HBVE), 1-4-cyclohexanedimethanolmono vinylether (CHDM-mono), 1,2,4-trivinylcyclohexane (TVCH), vinylphosphonic acid dimethylester (VPA) or vinylphosphonic acid dimethyl ester (VPADME).

As well as, or in place of, free radically-polymerizable monomers any concentration and type of free-radically polymerizable oligomer, including but not restricted to polyurethane acrylates, polyester acrylates, polyether acrylates and epoxy acrylates may be used.

### Colorants

Where the compositions of the invention require colourants, suitable colorants include, but are not limited to organic or inorganic pigments and dyes. The dyes include but are not limited to azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 150, 155, 174, 180, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36, 71; Pigment Blue Numbers 15, 15:3, 15:4; Pigment Violet Numbers 3, 19, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired.

The inks for use with the present invention preferably comprise a black pigment, such as carbon black.

### Other Components

The energy-curable compositions of the invention may also contain other components which enable them to perform in their intended application. These other ink components include, but are not restricted to; stabilizers, wetting aids, slip agents, inert resins, antifoams, fillers, rheological aids, amine synergists, etc.

A stabilizer may also be used in the composition to ensure good pot life of the ink, examples of which are nitroxy based stabilizers such as OHTEMPO, TEMPO, and Irgastab UV10. Phenolic stabilizers such as hydroquinone (HQ), methyletherhydroquinone (MEHQ), butylhydroxytoluene (BHT) and 2,6-di-tert-butyl-N,N-dimethylamino-p-cresol. Nitrosophenylhydroxylamine (NPHA) base inhibitors NPHA, amine salts, and metal salts (Al salt, N-PAL) plus the aromatic amine inhibitors diphenylamine (DPA) and phenylenediamine (PPD). Other suitable stabilizers are Florstab UV-1, UV-8, Genorad 16 and 18. Quinone methide such as found in BASF Irgastab UV-22, can be used.

Included in the ink formulation can be a suitable de-aerator, which prevents the formation of air inclusions and pinholes in the cured coating. The following, non-limiting, products are available from EVONIK: TEGO AIREX 900, 910, 916, 920, 921, 931, 936, 940, 944, 945, 950, 962, 980, 986.

Defoamers can also be included in the formulation, which prevent the formation of foam during manufacture of the ink and also while jetting. These are particularly important with recirculating printheads. Suitable, non-limiting, defoamers include TEGO FOAMEX N, FOAMEX 1488, 1495, 3062, 7447, 800, 8030, 805, 8050, 810, 815N, 822, 825, 830,831, 835, 840,842, 843, 845, 855, 860, 883, TEGO FOAMEX K3, TEGO FOAMEX K7/K8 and TEGO TWIN 4000 available from EVONIK. Available from BYK is BYK-066N, 088, 055, 057, 1790, 020, BYK-A 530, 067A, and BYK 354.

Surface Control Additives are often used to control the surface tension of the ink which is required to adjust the wetting on the face plate of the printhead and also to give the desired drop spread on the substrate and in the case of multi pass inkjet printing wet on dry drop spread. They can also be used to control the level of slip and scratch resistance of the coating. Suitable surface control additives include but are not limited to TEGO FLOW300, 370,425, TEGO GLIDE 100, 110,130,406, 410,411, 415, 420, 432, 435, 440, 482, A115, B1484, TEGO GLIDE ZG 400, TEGO RAD2010, 2011, 2100, 2200N, 2250, 2300, 2500, 2600, 2650, 2700, TEGO TWIN 4000, 4100, TEGO WET 240, 250, 260,265,270, 280, 500, 505, 510 and TEGO WET KL245 all available from EVONIK. Available from BYK are BYK 333,337, BYK UV3500, BYK 378, 347,361, BYK UV3530, 3570, CERAFLOUR 998, 996, NANOBYK 3601, 3610, 3650 and CERMAT 258. From Allnex EBECRYL 350, 1360, MODAFLOW 9200, EBECRYL 341. From SARTOMER the aliphatic silicone acrylate CN9800 may be used.

The present invention has been described in detail, including the preferred embodiments thereof. However, it will be appreciated that those skilled in the art, upon consideration of the present disclosure, may make modifications and/or improvements on this invention that fall within the scope of the invention.

### EXAMPLES

The invention is further described by the following non-limiting examples which further illustrate the invention, and are not intended, nor should they be interpreted to, limit the scope of the invention.

### Ink Preparation

To demonstrate the invention, a number of pigmented inkjet inks were prepared according to the compositions laid out in in Tables 1, 2 and 3. The inks were blended with a Silverson type high shear blender.

### Viscosity Measurements

The viscosities of the inks were measured using a Brookfield DV-II+ Pro Viscometer equipped with Spindle no. 18, at 100 rpm at 45°C.

### Assessing the Cure Responses of the Inks

The inks were applied to Opacity Test cards (Form 2A, ex. Leneta) at 6µm and cured using a Nordson belt conveyor, equipped with a Phoseon 14W 395nm UV-LED lamp. The belt speed and power input to the lamp were adjusted to achieve the doses laid out in Tables 1 and 2, whether that be a single dose or a combination of lower doses meeting the requirements of the invention.

The surface cure of the prints was assessed by drawing a cotton wool bud across the print surface. For a well-cured print, the cotton wool bud caused no observable marking of the print surface whereas a print with deficient surface cure produced observable marking of the surface with the cotton wool bud. This is due to poorly cured ink at the surface.

### Curing the Inks for Extraction Testing

The inks were applied to 23µm Melinex 813 (a polyester film) at 6µm, and then cured using the apparatus previously described according to the conditions laid out in Table 4.

### Assessing the Level of Extractable Monomer

The levels of unbound, unreacted monomer residues in a print were determined by a 'total extraction' test. This test involved soaking 30cm² of the print in 2ml of methanol, containing 0.005% (w/w) of MEHQ (stabilizer) for 24 hours at room temperature before the methanol solution was analyzed by GC-MS. The GC-MS was calibrated with known solutions of the monomers and the results are reported as the amount of uncured monomer per unit area of print, expressed as µg/dm².

Compositions and UV-Curing Process Demonstrating Improvements to Surface Cure The compositions and the UV-LED cure responses of Inventive and comparative compositions are provided in Tables 1 and 2 below.

**Table 1: UV-LED Curable Inkjet Compositions having low Photoinitiator Concentrations demonstrating superior cure response via the Inventive Multi-Exposure Process**

| | Comparative Example 1 | Inventive Example 1 | Inventive Example 2 | Inventive Example 3 | Inventive Example 4 | Inventive Example 5 | Inventive Example 6 |
|---|---|---|---|---|---|---|---|
| VEEA¹ | 35.0 | 35.0 | 35.0 | 35.0 | 35.0 | 35.0 | 35.0 |
| 3-MePDDA² | 27.0 | 30.0 | 32.0 | 28.0 | 31.0 | 32.0 | 32.5 |
| TMPEOTA³ | 12.0 | 12.0 | 12.0 | 12.0 | 12.0 | 12.0 | 12.0 |
| Genomer 5271⁴ | 7.0 | 7.0 | 5.0 | 9.0 | 7.0 | 7.0 | 7.0 |
| Omnipol TX⁵ | 4.0 | 2.0 | 2.0 | 2.0 | 2.0 | 2.0 | - |
| DETX⁶ | - | - | - | - | - | - | 1.5 |
| Omnirad 819⁷ | 5.0 | 4.0 | 4.0 | 4.0 | 3.0 | 2.0 | 2.0 |
| TegoGlide 410⁸ | 1.0 | 1.0 | 1.0 | 1.0 | 1.0 | 1.0 | 1.0 |
| Cyan Pigment Dispersion⁹ | 9.0 | 9.0 | 9.0 | 9.0 | 9.0 | 9.0 | 9.0 |
| Viscosity at 45°C (mPa.s) | 6.78 | 6.63 | 6.12 | 7.17 | 6.54 | 6.30 | 6.18 |

Notes to Table 1: ¹VEEA = 2-(2-vinyloxyethoxy)ethyl acrylate; ²3-MePDDA = 3-Methylpentanediol diacrylate; ³TMPEOTA = Trimethylolpropane ethoxylate triacrylate (3 moles ethoxylation) (Sartomer SR454); ⁴Genomer 5271 = Acrylated Amine (ex. RAHN); ⁵Omnipol TX = Polymeric thioxanthone photoinitiator (ex. IGM Resins); ⁶DETX = 2,4-Diethyl-9H-thioxanthen-9-one, CAS No.: 82799-44-8; ⁷Omnirad 819 = Acylphosphine oxide photoinitiator (ex. IGM Resins); ⁸Tego Glide 410 = silicone polyether surfactant (ex. Evonik); ⁹Cyan Dispersion = a proprietary dispersion containing 25.0% (w/w) of Pigment 15:4, the remainder comprising the dispersant, stabilizers and dipropylene glycol diacrylate (DPGDA).

Table 2 shows how these inks cured when exposed to different cure profiles, whether that be a single exposure to the output of the UV-LED lamp or by the inventive multi-exposure process.

**Table 2: Enhanced Surface Cure via the Inventive Multi-Exposure Process**

| Cure Profile (mJ/cm²) | Total Dose (mJ/cm²) | Comparative Example 1 | Inventive Example 1 | Inventive Example 2 | Inventive Example 3 | Inventive Example 4 | Inventive Example 5 | Inventive Example 6 |
|---|---|---|---|---|---|---|---|---|
| 650 | 650 | Pass | Fail | Fail | Fail | Fail | Fail | Fail |
| 450 | 450 | Fail | Fail | Fail | Fail | Fail | Fail | Fail |
| 50+300 | 350 | Pass | Pass | Pass | Pass | Pass | Fail | Pass |
| 50+50+250 | 350 | Pass | Pass | Pass | Pass | Pass | Pass | Pass |
| 50+250 | 300 | Pass | Pass | Pass | Pass | Pass | Fail | Pass |
| 50+200 | 250 | Pass | Pass | Fail | Pass | Pass | Fail | Pass |
| 50+50+150 | 250 | Pass | Pass | Fail | Pass | Pass | Pass | Pass |
| 50+150 | 200 | Pass | Pass | Fail | Pass | Pass | Fail | Pass |
| 50+50+100 | 200 | Pass | Fail | Fail | Pass | Pass | Fail | Pass |

The results in Table 2 show that all the inkjet compositions failed the surface cure test when exposed to a single exposure of 450 mJ/cm². Only Comparative Example 1, with a total photoinitiator concentration of 9.0% successfully achieved surface cure with a single exposure of 650 mJ/cm² from the 395nm UV-LED lamp.

All the Inventive examples, having total photoinitiator concentrations of 6.0% or less, were able to produce prints having excellent surface cure when exposed to multi-exposure UV-curing processes of the invention. This was achieved at total UV-doses of 350 mJ/cm² or less, whereas all the Inventive Inkjet compositions failed to satisfactorily surface cure with a single exposure of 450 mJ/cm².

Inventive Example 5 shows that an ink composition can achieve better surface cure when exposed to three UV-LED exposures than two UV-LED exposures, demonstrating a further aspect of the invention. Indeed, Inventive Example 5 was able to achieve satisfactory surface cure when exposed to three UV-LED exposures with a total dose of 250 mJ/cm².

Inventive Example 6, with a total photoinitiator concentration of only 3.5%, delivered prints having excellent surface cure by the multi-exposure UV-LED process down to a total dose of 200 mJ/cm². The potential benefits demonstrated by Inventive Example 6, along with the other inventive examples, cured according to the multi-exposure UV-LED process is that lower total UV-doses are required to deliver satisfactory cure. This means that; (1) lower energy is required, and (2) faster press speeds can be realized. With respect to the latter benefit, a further aspect of the invention is that press speeds in excess of 60 m/min, in excess of 70 m/min, in excess of 80 m/min, in excess of 100 m/min, are possible.

To demonstrate how the inventive process can be used in the preparation of UV inkjet inks for low migration applications, Inventive Ink composition 7 was prepared according to Table 3. This ink was then cured under various conditions according to Table 4 and was assessed for both its surface cure response and the amount of uncured monomer, according to the methods previously described.

**Table 3: UV Inkjet Ink Composition for Low Migration Printing Applications**

| | Inventive Example 7 |
|---|---|
| VEEA | 25.0 |
| 3-MePDDA | 25.0 |
| DPGDA¹ | 12.5 |
| TMP(EO)15TA² | 15.0 |
| Genomer 5271 | 7.5 |
| Omnirad 819 | 3.0 |
| Omnipol TX | 3.0 |
| TegoGlide 410 | 1.0 |
| Black Pigment Dispersion³ | 8.0 |
| Total | 100 |

| | |
|---|---|
| Viscosity at 45°C (mPa.s) = 10.5 | |

Notes to Table 1: ¹DPGDA = Dipropylene glycol diacrylate; ²TMP(EO)15TA = Trimethylolpropane ethoxylate triacrylate (15 moles ethoxylation) (Sartomer SR9035, ex. Arkema); ³Black Pigment Dispersion = 25.0% (w/w) of oxidized pigment carbon black, the remainder comprising dispersant, stabilizers and DPGDA.

Table 4 shows the benefits that the inventive multi-exposure UV-LED curing process of the invention has with respect to both the surface cure and for reducing the amount of uncured monomer.

**Table 4: Enhancements to Cure with Inventive Example 7**

| Cure Profile (mJ/cm²) | Total Dose (mJ/cm²) | Surface Cure | Extractable DPGDA (µg/dm²) | Extractable 3-MePDDA (µg/dm²) | Extractable VEEA (µg/dm²) |
|---|---|---|---|---|---|
| 350 | 350 | Fail | 195 | 140 | 185 |
| 50+300^{a} | 350 | Pass | 20 | 16 | 25 |
| 50+250^{b} | 300 | Pass | 37 | 29 | 46 |
| 150+150 | 300 | Pass | 142 | 104 | 147 |
| 100+200 | 300 | Pass | 124 | 89 | 130 |
| 100+100+100 | 300 | Pass | 130 | 95 | 136 |
| 50+100+100 | 250 | Pass | 97 | 70 | 103 |
| 75+75+75+75 | 300 | Pass | 135 | 72 | 97 |

The results in Table 4 again show the benefits of the inventive multi-exposure UV-LED curing process for inkjet ink compositions. In this case the ink is suitable for low migration printing applications, including coding and marking.

For delivering the lowest level of uncured monomer it is preferable that an initial first exposure from a UV-LED light source of 75 mJ/cm², or less be used, as shown particularly by a, b and c in Table 4. This is a further aspect of the invention.

## Claims

1. A method of curing an ink composition, wherein the curing is carried out by exposure to two or more separate UV irradiations from UV-LED lamps; the sum total of all the separate UV exposures is 450 mJ/cm² or less; wherein the first irradiation provides a cure dose of equal to or less than 75 mJ/cm² and a subsequent irradiation provides a cure dose equal to or greater than 100 mJ/cm²,
wherein the first irradiation cure dose and the subsequent irradiation cure dose are different;
and wherein the ink comprises ≤ 9.0% (w/w) of any blend of photoinitiators; the ink further comprises an acrylated amine; and wherein the blend of photoinitiators comprises ≤ 5.0% (w/w) of any acylphosphine oxide photoinitiators, relative to the total weight of the ink composition;
and wherein the curing of the inks is performed in a printing process with a press speed of 60 m/min or greater.

2. The method of claim 1, wherein the first irradiation provides a cure dose of equal to or less than 50 mJ/cm² and the subsequent irradiation provides a cure dose of equal to or greater than 100 mJ/cm².

3. The method of claims 1 or 2, wherein the first irradiation provides a cure dose of equal to or less than 50 mJ/cm² and the subsequent irradiation provides a cure dose of equal to or greater than 150 mJ/cm².

4. The method of any preceding claim, which is cured by three or more separate UV-LED exposures.

5. The method of any preceding claim, wherein the ink comprises ≤ 7.0% (w/w) of any blend of photoinitiators, such as ≤ 6.0% (w/w) of any blend of photoinitiators; optionally wherein the ink comprises ≤ 5.0% (w/w) of any blend of photoinitiators.

6. The method of any preceding claim, wherein
i) the ink comprises ≥ 5.0% (w/w) of any blend of acrylated amines; and/or
ii) wherein the ink comprises one or more acylphosphine oxide photoinitiators selected from the group consisting of diphenyl(2,4,6-trimethylbenzoyl)phosphine oxide, phenylbis(2,4,6-trimethylbenzoyl)phosphine oxide, ethyl (2,4,6-trimethylbenzoyl) phenylphosphinate, bis(2,6-dimethoxybenzoyl)-2,4,4-trimethylpentylphosphinoxide, and any multifunctional, polymerizable or polymeric acylphosphine oxide; and/or
iii) wherein the ink comprises a thioxanthone photoinitiator; optionally wherein the ink comprises one or more thioxanthone photoinitiators selected from the group consisting of isopropyl thioxanthone, diethylthioxanthone, chloropropylthioxanthone, chlorothioxanthone, and any multifunctional, polymerisable or polymeric thioxanthone.

7. The method of any preceding claim, wherein
i) the ink comprises at least 0.01% (w/w) of any blend of photoinitiators, such as at least 1% (w/w), at least 2% (w/w), or at least 3% (w/w) of any blend of photoinitiators; and/or
ii) the acrylated amine comprises a product derived from the Michael reaction of a multifunctional acrylate monomer, or oligomer, with an alkanolamine; and/or
iii) wherein at least one, and more preferably two, of the UV-LED lamps used in the curing process is air-cooled; optionally wherein all the UV-LED lamps used in the curing process are air-cooled.

8. The method of any preceding claim, wherein at least one of the UV-LED lamps used in the curing process has a peak irradiance power output of ≤ 20 W/cm², optionally wherein at least one of the UV-LED lamps used in the curing process has a peak irradiance power output of ≤ 18 W/cm².

9. The method of any preceding claim,
i) wherein at least one of the UV-LED lamps used in the curing process emits light between 365 to 405nm; and/or
ii) wherein at least one of the UV-LED lamps has a peak in the wavelength range above 350nm, such as between 365 and 405 nm, or between 380 and 410 nm; and/or
iii) which is cured with a total UV dose from all individual UV exposures of ≤ 450 mJ/cm²; and/or
iv) which is cured with a total UV dose from all individual UV exposures of ≤ 350 mJ/cm²; optionally which is cured with a total UV dose from all individual UV exposures of ≤ 250 mJ/cm².

10. The method of any preceding claim, comprising exposure to three or more separate UV irradiations from UV-LED lamps, wherein the first and second irradiations provide cure doses each individually equal to or less than 50 mJ/cm² and a subsequent irradiation provides a cure dose equal to or greater than 100 mJ/cm².

11. The method of any preceding claim, wherein
i) the ink comprises less than 20% (w/w) of any blend of monofunctional monomers; and/or
ii) wherein the ink composition comprises a black pigment; and/or
iii) wherein the ink is an inkjet ink.

12. The method of any preceding claim, wherein the method of curing is part of an inkjet printing process; optionally wherein the inkjet printing process is single-pass inkjet printing.

13. The method of any preceding claim, wherein the curing of the inks is performed in a printing process with a press speed of 100 m/min or greater.

14. The method of any preceding claim,
i) which is conducted in standard atmospheric oxygen concentration; and/or
ii) wherein the method of curing is part of a flexographic printing process; and/or
iii) wherein the method of curing is part of a hybrid printing process comprising any combination of flexographic and inkjet printing stations to generate printed matter.

15. A method of printing an ink composition on a substrate, said method comprising the step of disposing the ink composition according to any preceding claim on said substrate, and curing said composition by the method of any preceding claim, preferably when said substrate is a food packaging substrate.

## Patentansprüche

1. Verfahren zum Härten einer Tintenzusammensetzung, wobei das Härten durch Exposition gegenüber zwei oder mehr getrennten UV-Bestrahlungen von UV-LED-Lampen durchgeführt wird; wobei die Summe aller getrennten UV-Expositionen 450 mJ/cm² oder weniger beträgt; wobei die erste Bestrahlung eine Härtungsdosis von gleich oder weniger als 75 mJ/cm² bereitstellt und eine nachfolgende Bestrahlung eine Härtungsdosis von gleich oder mehr als 100 mJ/cm² bereitstellt,
wobei die erste Bestrahlungshärtungsdosis und die nachfolgende Bestrahlungshärtungsdosis unterschiedlich sind;
und wobei die Tinte ≤ 9,0 % (w/w) an einem beliebigen Gemisch von Photoinitiatoren umfasst; wobei die Tinte ferner ein acryliertes Amin umfasst; und wobei das Gemisch von Photoinitiatoren ≤ 5,0 % (w/w) an einem beliebigen Acylphosphinoxid-Photoinitiator, bezogen auf das Gesamtgewicht der Tintenzusammensetzung, umfasst;
und wobei das Härten der Tinten in einem Druckverfahren mit einer Druckgeschwindigkeit von 60 m/min oder mehr durchgeführt wird.

2. Verfahren nach Anspruch 1, wobei die erste Bestrahlung eine Härtungsdosis von gleich oder weniger als 50 mJ/cm² bereitstellt und die nachfolgende Bestrahlung eine Härtungsdosis von gleich oder mehr als 100 mJ/cm² bereitstellt.

3. Verfahren nach Ansprüchen 1 oder 2, wobei die erste Bestrahlung eine Härtungsdosis von gleich oder weniger als 50 mJ/cm² bereitstellt und die nachfolgende Bestrahlung eine Härtungsdosis von gleich oder mehr als 150 mJ/cm² bereitstellt.

4. Verfahren nach einem der vorstehenden Ansprüche, das durch drei oder mehr getrennte UV-LED-Belichtungen gehärtet wird.

5. Verfahren nach einem der vorstehenden Ansprüche, wobei die Tinte ≤ 7,0 % (w/w) an einen beliebigen Gemisch von Photoinitiatoren umfasst, wie z.B. ≤ 6,0 % (w/w) an einem beliebigen Gemisch von Photoinitiatoren; wobei die Tinte gegebenenfalls ≤ 5,0 % (w/w) an einem beliebigen Gemisch von Photoinitiatoren umfasst.

6. Verfahren nach einem der vorstehenden Ansprüche, wobei
i) die Tinte ≥ 5,0 % (w/w) an einem beliebigen Gemisch von acrylierten Aminen umfasst; und/oder
ii) wobei die Tinte einen oder mehrere Acylphosphinoxid-Photoinitiatoren ausgewählt aus der Gruppe bestehend aus Diphenyl(2,4,6-trimethylbenzoyl)phosphinoxid, Phenylbis(2,4,6-trimethylbenzoyl)phosphinoxid, Ethyl(2,4,6-trimethylbenzoyl)phenylphosphinat, bis(2,6-dimethoxybenzoyl)-2,4,4-trimethylpentylphosphinoxid und einem beliebigen multifunktionellen, polymerisierbaren oder polymeren Acylphosphinoxid umfasst; und/oder
iii) wobei die Tinte einen Thioxanthon-Photoinitiator umfasst; gegebenenfalls wobei die Tinte einen oder mehrere Thioxanthon-Photoinitiatoren ausgewählt aus der Gruppe bestehend aus Isopropylthioxanthon, Diethylthioxanthon, Chlorpropylthioxanthon, Chlorthioxanthon und einem beliebigen multifunktionellen, polymerisierbaren oder polymeren Thioxanthon umfasst.

7. Verfahren nach einem der vorstehenden Ansprüche, wobei
i) die Tinte wenigstens 0,01 % (w/w) an einem beliebigen Gemisch von Photoinitiatoren, wie z.B. wenigstens 1 % (w/w), wenigstens 2 % (w/w) oder wenigstens 3 % (w/w) an einem beliebigen Gemisch von Photoinitiatoren, umfasst; und/oder
ii) das acrylierte Amin ein Produkt abgeleitet von der Michael-Reaktion eines multifunktionellen Acrylatmonomers oder Oligomers mit einem Alkanolamin umfasst; und/oder
iii) wobei wenigstens eine und bevorzugter zwei der UV-LED-Lampen, die bei dem Härtungsverfahren verwendet werden, luftgekühlt ist; wobei gegebenenfalls alle UV-LED-Lampen, die bei dem Härtungsverfahren verwendet werden, luftgekühlt sind.

8. Verfahren nach einem der vorstehenden Ansprüche, wobei wenigstens eine der UV-LED-Lampen, die bei dem Härtungsverfahren verwendet werden, eine Spitzen-Bestrahlungsleistungsabgabe von ≤ 20 W/cm² aufweist, wobei gegebenenfalls wenigstens eine der UV-LED-Lampen, die bei dem Härtungsverfahren verwendet werden, eine Spitzen-Bestrahlungsleistungsausgabe von ≤ 18 W/cm² aufweist.

9. Verfahren nach einem der vorstehenden Ansprüche,
i) wobei wenigstens eine der UV-LED-Lampen, die bei dem Härtungsverfahren verwendet werden, Licht zwischen 365 bis 405 nm emittiert; und/oder
ii) wobei wenigstens eine der UV-LED-Lampen eine Spitze in dem Wellenlängenbereich über 350 nm, wie z.B. zwischen 365 und 405 nm oder zwischen 380 und 410 nm, aufweist; und/oder
iii) wobei mit einer Gesamt-UV-Dosis aus allen einzelnen UV-Belichtungen von ≤ 450 mJ/cm² gehärtet wird; und/oder
iv) wobei mit einer Gesamt-UV-Dosis aus allen einzelnen UV-Belichtungen von ≤ 350 mJ/cm² gehärtet wird; gegebenenfalls mit einer Gesamt-UV-Dosis aus allen einzelnen UV-Belichtungen von ≤ 250 mJ/cm² gehärtet wird.

10. Verfahren nach einem der vorstehenden Ansprüche, umfassend Exposition mit drei oder mehr getrennten UV-Bestrahlungen von UV-LED-Lampen, wobei die erste und die zweite Bestrahlung Härtungsdosen jeweils einzeln von gleich oder kleiner als 50 mJ/cm² bereitstellen und eine nachfolgende Bestrahlung eine Härtungsdosis von gleich oder größer als 100 mJ/cm² bereitstellt.

11. Verfahren nach einem der vorstehenden Ansprüche, wobei
i) die Tinte weniger als 20 % (w/w) an einem beliebigen Gemisch von monofunktionellen Monomeren umfasst; und/oder
ii) wobei die Tintenzusammensetzung ein schwarzes Pigment umfasst; und/oder
iii) wobei die Tinte eine Tintenstrahltinte ist.

12. Verfahren nach einem der vorstehenden Ansprüche, wobei das Härtungsverfahren Teil eines Tintenstrahldruckverfahrens ist; wobei gegebenenfalls das Tintenstrahldruckverfahren ein Single-Pass-Tintenstrahldruck ist.

13. Verfahren nach einem der vorstehenden Ansprüche, wobei das Härten der Tinten bei einem Druckverfahren mit einer Druckgeschwindigkeit von 100 m/min oder mehr durchgeführt wird.

14. Verfahren nach einem der vorstehenden Ansprüche,
i) das in einer Standardkonzentration von atmosphärischem Sauerstoffn durchgeführt wird; und/oder
ii) wobei das Härtungsverfahren Teil eines Flexodruckverfahrens ist; und/oder
iii) wobei das Härtungsverfahren Teil eines Hybriddruckverfahrens ist, das eine beliebige Kombination von Flexodruck- und Tintenstrahldruckstationen umfasst, um bedrucktes Material zu erzeugen.

15. Verfahren zum Drucken einer Tintenzusammensetzung auf ein Substrat, wobei das Verfahren den Schritt des Anordnens der Tintenzusammensetzung nach einem der vorstehenden Ansprüche auf dem Substrat und des Härtens der Zusammensetzung durch das Verfahren nach einem der vorstehenden Ansprüche umfasst, vorzugsweise wobei das Substrat ein Lebensmittelverpackungssubstrat ist.

## Revendications

1. Procédé de durcissement d'une composition d'encre, dans lequel le durcissement est effectué par exposition à deux ou plusieurs irradiations UV distinctes provenant de lampes UV-LED ; la somme totale de toutes les expositions UV distinctes est de 450 mJ/cm² ou moins ;
dans lequel la première irradiation fournit une dose pour durcissement égale ou inférieure à 75 mJ/cm² et une irradiation ultérieure fournit une dose pour durcissement égale ou supérieure à 100 mJ/cm²,
dans lequel la première dose pour durcissement par irradiation et la dose pour durcissement par irradiation suivante sont différentes ;
et dans lequel l'encre comprend ≤ 9,0% (p/p) de tout mélange de photoinitiateurs ; l'encre comprend en outre une amine acrylée ; et dans lequel le mélange de photoinitiateurs comprend ≤ 5,0% (p/p) de tous photoinitiateurs de type oxyde d'acylphosphine, par rapport au poids total de la composition d'encre ;
et dans lequel le durcissement des encres est réalisé dans un procédé d'impression avec une vitesse de presse de 60 m/min ou plus.

2. Procédé selon la revendication 1, dans lequel la première irradiation fournit une dose pour durcissement égale ou inférieure à 50 mJ/cm² et l'irradiation suivante fournit une dose pour durcissement égale ou supérieure à 100 mJ/cm².

3. Procédé selon la revendication 1 ou 2, dans lequel la première irradiation fournit une dose pour durcissement égale ou inférieure à 50 mJ/cm² et l'irradiation suivante fournit une dose pour durcissement égale ou supérieure à 150 mJ/cm².

4. Procédé selon l'une quelconque des revendications précédentes, qui est durci par trois expositions UV-LED distinctes ou plus.

5. Procédé selon l'une quelconque des revendications précédentes, dans lequel l'encre comprend ≤ 7,0 % (p/p) d'un mélange quelconque de photoinitiateurs, tel que ≤ 6,0 % (p/p) d'un mélange quelconque de photoinitiateurs ; facultativement, dans lequel l'encre comprend ≤ 5,0 % (p/p) d'un mélange quelconque de photoinitiateurs.

6. Procédé selon l'une quelconque des revendications précédentes, dans lequel
i) l'encre comprend ≥ 5,0 % (p/p) de tout mélange d'amines acrylées ; et/ou
ii) dans lequel l'encre comprend un ou plusieurs photoinitiateurs de type oxyde d'acylphosphine choisis dans le groupe constitué par l'oxyde de diphényl(2,4,6-triméthylbenzoyl)phosphine, l'oxyde de phénylbis(2,4,6-triméthylbenzoyl)phosphine, le phénylphosphinate d'éthyle et de (2,4,6-triméthylbenzoyle), l'oxyde de bis(2,6-diméthoxybenzoyl)-2,4,4-triméthylpentylphosphine, et tout oxyde d'acylphosphine multifonctionnel, polymérisable ou polymérique ; et/ou
iii) l'encre comprenant un photoinitiateur de type thioxanthone ; éventuellement l'encre comprenant un ou plusieurs photoinitiateurs de type thioxanthone choisis dans le groupe constitué par l'isopropyl-thioxanthone, la diéthylthioxanthone, la chloropropylthioxanthone, la chlorothioxanthone, et une quelconque thioxanthone multifonctionnelle, polymérisable ou polymérique.

7. Procédé selon l'une quelconque des revendications précédentes, dans lequel
i) l'encre comprend au moins 0,01 % (p/p) de tout mélange de photoinitiateurs, tel qu'au moins 1 % (p/p), au moins 2 % (p/p), ou au moins 3 % (p/p) de tout mélange de photoinitiateurs ; et/ou
ii) l'amine acrylée comprend un produit issu de la réaction de Michael d'un monomère ou oligomère d'acrylate multifonctionnel, avec une alcanolamine ; et/ou
iii) dans lequel au moins une, et plus préférablement deux, des lampes UV-LED utilisées dans le procédé de durcissement sont refroidies par air ; facultativement dans lequel toutes les lampes UV-LED utilisées dans le procédé de durcissement sont refroidies par air.

8. Procédé selon l'une quelconque des revendications précédentes, dans lequel au moins l'une des lampes UV-LED utilisées dans le procédé de durcissement a une puissance de sortie d'irradiance maximale de ≤ 20 W/cm², facultativement dans lequel au moins l'une des lampes UV-LED utilisées dans le procédé de durcissement a une puissance de sortie d'irradiance maximale de ≤ 18 W/cm².

9. Procédé selon l'une quelconque des revendications précédentes,
i) au moins une des lampes UV-LED utilisées dans le procédé de durcissement émettant de la lumière entre 365 et 405 nm ; et/ou
ii) au moins une des lampes UV-LED ayant un pic dans la plage de longueurs d'onde supérieur à 350 nm, tel qu'entre 365 et 405 nm, ou entre 380 et 410 nm ; et/ou
iii) qui est durcie par une dose d'UV totale pour toutes les expositions à des UV individuelles de ≤ 450 mJ/cm² ; et/ou
iv) qui est durcie par une dose d'UV totale pour toutes les expositions à des UV individuelles de ≤ 350 mJ/cm² ; qui est facultativement durcie par une dose d'UV totale parmi toutes les expositions à des UV individuelles de ≤ 250 mJ/cm².

10. Procédé selon l'une quelconque des revendications précédentes, comprenant l'exposition à trois irradiations UV distinctes ou plus par des lampes UV-LED, dans lequel les première et seconde irradiations fournissent des doses de durcissement chacune individuellement égales ou inférieures à 50 mJ/cm² et une irradiation subséquente fournit une dose pour durcissement égale ou supérieure à 100 mJ/cm².

11. Procédé selon l'une quelconque des revendications précédentes, dans lequel
i) l'encre comprend moins de 20 % (p/p) de tout mélange de monomères monofonctionnels ; et/ou
ii) la composition d'encre comprenant un pigment noir ; et/ou
iii) l'encre étant une encre pour jet d'encre.

12. Procédé selon l'une quelconque des revendications précédentes, dans lequel le procédé de durcissement fait partie d'un procédé d'impression à jet d'encre ; facultativement, dans lequel le procédé d'impression à jet d'encre est une impression à jet d'encre à passage unique.

13. Procédé selon l'une quelconque des revendications précédentes, dans lequel le durcissement des encres est effectué dans un procédé d'impression avec une vitesse de presse de 100 m/min ou plus.

14. Procédé selon l'une quelconque des revendications précédentes,
i) qui est effectué à la concentration d'oxygène atmosphérique standard ; et/ou
ii) le procédé de durcissement faisant partie d'un procédé d'impression flexographique ; et/ou
iii) le procédé de durcissement faisant partie d'un procédé d'impression hybride comprenant une quelconque combinaison de stations d'impression flexographique et à jet d'encre pour générer un matériau imprimé.

15. Procédé d'impression d'une composition d'encre sur un substrat, ledit procédé comprenant l'étape de dépôt de la composition d'encre selon l'une quelconque des revendications précédentes sur ledit substrat, et de durcissement de ladite composition par le procédé selon l'une quelconque des revendications précédentes, de préférence lorsque ledit substrat est un substrat d'emballage alimentaire.
